# EUROPEAN PATENT APPLICATION

(11) **EP 1 481 867 A1**
(43) Date of publication of application: **01.12.2004**
(21) Application number: 04011963.8
(22) Date of filing: 19.05.2004
(51) Int. Cl.: B60T 17/04

(54) **Variable leverage brake pedal linkage mechanism**

(30) Priority: 28.05.2003 US 447295
(71) Applicant: Dura Global Technologies, Inc., Rochester Hills, Michigan 48309 (US)
(72) Inventor: Mahendra Akhil, 48307 Rochester Hills (US); Smith Gordon, 48359 Lake Orion (US)
(74) Representative: Schaumburg, Thoenes, Thurn, Landskron Patentanwälte

(57) **Abstract**

A linkage mechanism producing a varying leverage brake pedal actuating a brake booster for a brake system. The linkage mechanism includes a drive link (20) pivotally mounted to a stationary bracket (23) and having a pin and slot connection (24,26) to the brake pedal (10). The drive link (20) is pivotally connected to a booster operating rod (18), and the pin and slot connection (24,26) causes the drive link booster rod pivotal connection to be swung up towards the brake pedal pivotal mount to increase the brake pedal leverage as it is advanced from a rest position.

## Description

### Background of the Invention

This invention concerns automotive brake system operating mechanisms and more particularly linkages interconnecting the brake foot pedal and a brake assisting vacuum booster.

It is considered desirable to vary the mechanical advantage or ratio of the brake pedal as the pedal stroke advances so as to allow a greater pedal leverage to be developed as in an emergency braking situation.

Such variable pedal ratio linkage mechanisms have heretofore been developed, as for example the mechanism shown in U.S. patent 4,615,235. However, such variable pedal ratio mechanisms typically have involved relatively complex linkages, and have required a relatively long brake pedal travel to achieve an increased mechanical advantage.

It is the object of the present invention to provide a variable ratio brake pedal linkage mechanism which is simple and reliable and develops an increased leverage within a short range of brake pedal travel.

### Summary of the Invention

The above object and others which will be understood upon a reading of the following specification and claims are achieved by a brake pedal mechanism including a drive link pivoted at one end to a stationary pivot point which drive link extends across the brake pedal to create overlapping portions. A pin and slot connection is provided between the overlapped pedal and link portions, as by a slot in the brake pedal which receives a drive pin projecting laterally from the drive link.

A brake booster operating rod is pivotally connected to the drive link opposite the drive link pivotal support to be advanced as the drive pin forces the drive link to be rotated about its pivotal support.

The point of pivotal connection between the booster rod and the drive link moves substantially closer to the brake pedal pivotal mount as the drive link is swung about its pivotal mount to thereby increase substantially the pedal ratio within a relatively short extent of travel from its rest position.

### Description of the Drawings

Figure 1 is a side elevational depiction of a brake pedal in the rest position equipped with a variable ratio linkage mechanism according to the present invention, connected to a brake booster for operating a brake system, both shown in block diagrammatic form.
Figure 2 is a side elevational view of the brake pedal and linkage mechanism components shown in Figure 1 in an intermediate pedal position.
Figure 3 is a side elevational view of the brake pedal and linkage mechanism components shown in Figures 1 and 2, in the fully depressed pedal position.

### Detailed Description

In the following detailed description, certain specific terminology will be employed for the sake of clarity and a particular embodiment described in accordance with the requirements of 35 USC 112, but it is to be understood that the same is not intended to be limiting and should not be so construed inasmuch as the invention is capable of taking many forms and variations within the scope of the appended claims.

Referring to the drawing Figures, a brake pedal 10 comprises an elongated member having a foot pad 12 at one end and an upper pivotal mount 15 on a stationary bracket 14 located above the brake pedal 10. The brake pedal 10 is advanced on its pivotal mount by the operator applying foot pressure on the pad 12 in order to operate the brake system 28 with the assistance of a brake booster 16 activated by an operating rod 18, the brake booster 16 and brake system 28 are depicted diagrammatically. This arrangement is well known in the art.

The booster operating rod 18 is drivingly connected to the brake pedal 10 by a drive link 20, which has a pivot support 22 at one end on by a stationary bracket 23, and also having a pivot connection 19 at the other end to one end of the brake booster operating rod 18.

The drive link 20 extends across and over the brake pedal 10 at a location intermediate the ends thereof so that these components have overlapping portions.

A drive pin 24 is fixed to the drive link 20 at an intermediate point along its length to project laterally into an elongated radial slot 26 formed in the overlapped portion of the brake pedal 10 extending in a radial direction with respect to the pedal pivotal mount. This pin and slot connection could also be comprised of the reverse arrangement of a slot in the drive link 20 and a pin on the brake pedal 10.

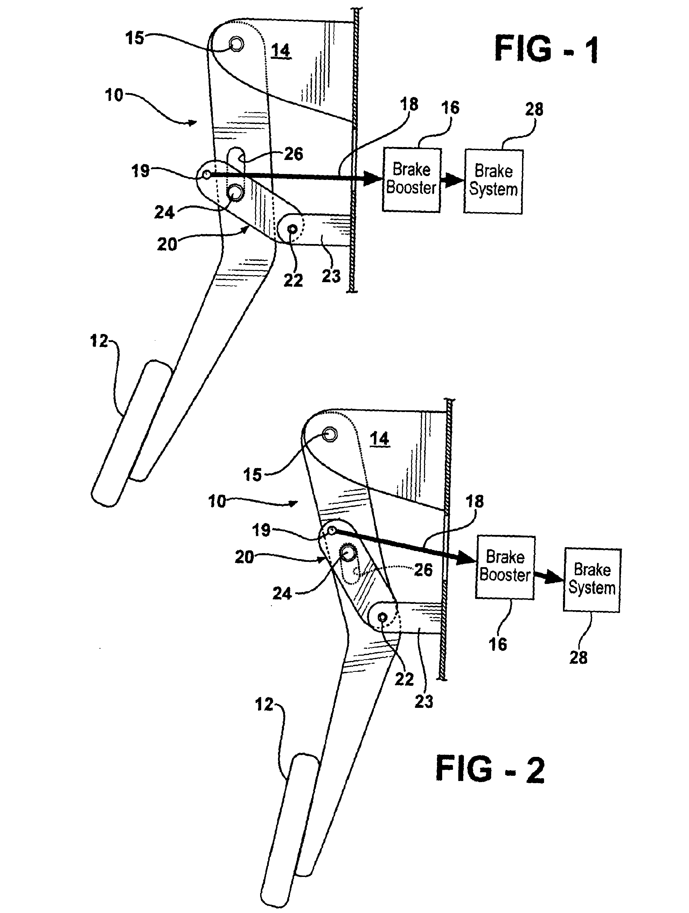

Thus, when the brake pedal 10 is depressed, it swings to the right as viewed in Figure 1. This movement causes the drive link 20 to be rotated clockwise about pivot 22 due to the driving engagement between the slot 26 and the pin 24 carried by the drive link 20 as viewed by a passenger in the vehicle. This motion of the drive link 20 in turn causes the booster rod 18 to be driven to the right to operate the brake system 28.

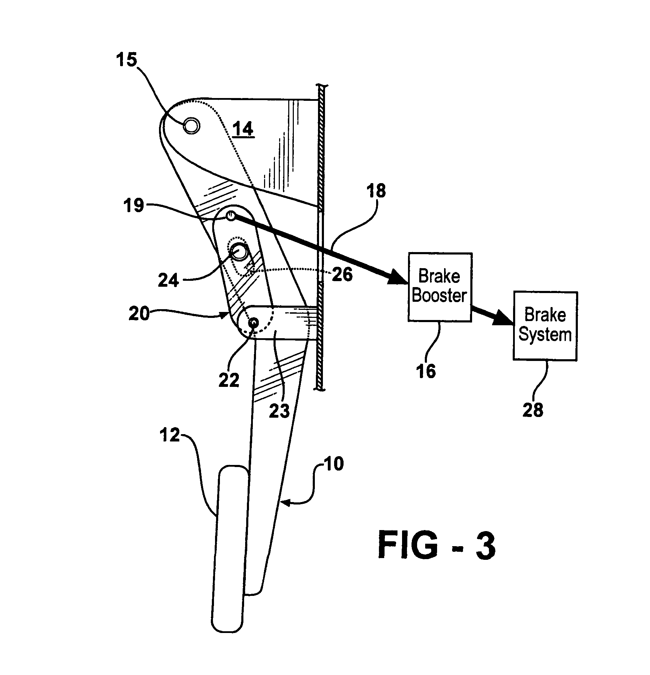

This relative movement of the components continues until full pedal travel is reached as shown in Figure 3.

As the drive link 20 swings clockwise about pivot 22, it moves from a position in which an imaginary line between pivots 19 and 23 extends crosswise to the brake pedal 10 (in Figure 1) to a position extending in a more vertical orientation in Figure 2 in which it is closer to alignment lengthwise with the brake pedal 10. This relative movement in turn causes the point of the pivotal connection 19 with the booster rod 18 to be moved substantially closer to the pivot mount 15 of the brake pedal 10.

Since the pedal ratio or leverage able to be exerted by the brake pedal 10 increases as the distance between pivots 19 and 15 decreases, this results in a varying pedal ratio, with an increased mechanical advantage as the brake pedal 10 is applied.

This is achieved with a linkage mechanism involving only a single drive link 20, and without requiring an excessive travel of the brake pedal 10.

## Claims

1. In combination with a brake system operated by a brake booster:
an elongated brake pedal pivotally supported at an upper end, and having a brake pad at an opposite end for receiving foot pressure applied by an operator;
a drive link pivotally mounted to a stationary support;
a booster operating rod connected at one end to said brake booster and at an opposite end pivotally connected to said drive link;
said drive link extending over said brake pedal at a point intermediate the ends of said brake pedal so that said brake pedal and drive link have partially overlapping portions;
a pin and slot connection between overlapping portions of said drive link and said brake pedal;
said drive link extending generally in a traverse direction to said brake pedal in a rest position of said brake pedal, and moving in a direction to become more aligned lengthwise with said brake pedal as said brake pedal is applied so as to carry said pivotal connection of said drive link to said booster rod substantially closer to said pivotal mount of said brake pedal as said brake pedal is applied, whereby the leverage exerted by said brake pedal on said booster rod increases with movement of said brake pedal from said rest position.

2. The combination according to claim 1 wherein said drive link is elongated having said pivotal mount at one end and said pivotal connection to said booster and at an opposite end.

3. The combination according to claim 1 wherein said pin and slot connection comprises a slot in a brake pedal overlapping portion, said slot extending radially with respect to said brake pedal pivotal mount and a pin fixed to an overlapping portion of said drive link extending laterally into said slot.

4. The combination according to claim 2 wherein said drive link is pivotally mounted to a stationary mount at a lower end thereof, said drive link being swung up towards a vertical position upon continued travel of said brake pedal.

5. The combination according to claim 4 wherein said pin is disposed within a lower section of said slot when said brake pedal is at said rest position and moves to a higher section as said brake pedal is applied.

6. A method of actuating a booster operated brake system with a pivotally supported brake pedal so as to exert greater leverage as said brake pedal is advanced from a rest position, comprising the steps of:
pivotally mounting a drive link to a stationary mount;
pivotally connecting a booster rod to said drive link at a point on said drive link spaced from said mount;
drivingly engaging said drive link with said brake pedal so as to cause said drive link to be swung about said pivotal mounting so as to bring said pivotal connection to said booster rod closer to said brake pedal pivotal support as said brake pedal is advanced from a rest position to thereby increase the leverage exerted by said brake pedal.

7. The method according to claim 6 wherein said step of drivingly engaging said drive link with said brake pedal comprises the step of establishing a pin and slot connection therebetween.

8. The method according to claim 7 wherein said step of establishing a pin and slot connection comprises the steps of forming a slot in said brake pedal and disposing said drive link to extend across a portion of said brake pedal to create overlapping portions of said drive link and brake pedal and affixing a pin to an overlapping portion of said drive link located so as to be received in said slot.

9. The method according to claim 8 wherein said step of engaging said brake pedal with said drive link includes the step of locating said pivotal mounting of said drive link so as to cause said drive link to swing up from a position extending transversely to said brake pedal to a more vertical and longitudinally aligned position with respect to said brake pedal as said brake pedal is advanced from a rest position.

10. The method according to claim 9 wherein in said engaging step, said drive link is pivotally mounted at point below said pin.
